# EUROPEAN PATENT APPLICATION

(11) **EP 4 249 732 A1**
(43) Date of publication of application: **27.09.2023**
(21) Application number: 23159004.3
(22) Date of filing: 28.02.2023
(51) Int. Cl.: F01D 21/00, F01D 21/20, F01D 19/02, F01D 25/36, F02C 7/32, G01H 1/00, G01P 3/00

(54) **PRIME MOVER FOR A GAS TURBINE ENGINE COUPLED TO AN ACCESSORY GEARBOX OUTPUT SHAFT**

(30) Priority: 25.03.2022 GB 202204218
(71) Applicant: Rolls-Royce plc, London N1 9FX (GB)
(72) Inventor: Smilek, Jan, Derby, DE24 8BJ (GB)
(74) Representative: Rolls-Royce plc

(57) **Abstract**

The present disclosure relates to a method for preventing bowing of a gas turbine shaft (50) during engine shutdown and to a system (100) for use with a gas turbine engine (10) having an accessory gearbox (52) drivably coupled to the gas turbine shaft (50). The system includes an accessory (64) of the accessory gearbox and an output shaft (106) drivably coupled between the accessory gearbox (52) and the accessory (64). The system further includes a sensor (110) configured to generate a sensor signal (112) and a controller (114) configured to determine a speed (S1) of the output shaft (106) based on the sensor signal (112). The controller (114) is further configured to determine a speed (S2) of the gas turbine shaft (50) based at least on the speed (S1) of the output shaft (106), and to compare the speed (S2) with a predetermined threshold speed (S3), wherein a prime mover (102) is activated when the speed (S2) is less than the speed (S3).

## Description

### FIELD OF THE DISCLOSURE

The present disclosure generally relates to a system and a method for use with a gas turbine engine having a gas turbine shaft and an accessory gearbox drivably coupled to the gas turbine shaft.

### BACKGROUND

Gas turbine engines may suffer from mechanical issues related to unbalanced shafts (e.g., rotors used in high pressure turbines and high pressure compressors). These mechanical issues in a gas turbine shaft may occur particularly due to uneven temperature gradient across the gas turbine shaft during an engine shutdown causing the gas turbine shaft to thermally distort (e.g., bow). In other words, the gas turbine shaft may bend during the engine shutdown as lower portions of a turbine are cooled faster than upper portions of the turbine. Bowing or distortion of the gas turbine shaft may lead to unbalanced vibrations thereby causing a detrimental impact on the lifespan of gas turbine engine components.

To prevent the bowing of the gas turbine shaft in the gas turbine engine, a slow turning motor or a barring motor is typically used to rotate the turbine at a low speed during the engine shutdown. The rotation of the turbine at low speed causes a uniform cooling of the turbine during the engine shutdown. However, the barring motor (a drive shaft of the barring motor) needs to be mechanically engaged with the gas turbine shaft only after a speed of the driven gas turbine shaft speed drops below a predetermined threshold speed in order to prevent overturning and damaging the barring motor due to inertia and residual rotational energy of the gas turbine shaft. Therefore, for an accurate timing of the drivable engagement of the barring motor with the gas turbine shaft, it is important to know the moment when the speed of the gas turbine shaft is less than the predetermined threshold speed.

One of the conventional techniques for measuring and/or monitoring the speed of the gas turbine shaft comprises use of variable reluctance sensors disposed on the gas turbine shaft. However, during the engine shutdown, a magnitude of an electrical signal of a variable reluctance sensor may drop with the decaying speed of the gas turbine shaft, and at some point, it may become too low to be processed by an electronic controller. Therefore, by using the variable reluctance sensors, it may be difficult to determine a precise timing of the drivable engagement of the barring motor with the gas turbine shaft.

According to another conventional technique, timing of the drivable engagement of the barring motor with the gas turbine shaft may be determined by modelling the decaying speed of the gas turbine shaft after the engine shutdown and implementing a safety margin to predict a time when the speed of the gas turbine shaft speed drops below the predetermined threshold speed. However, a decaying rate of the speed of the gas turbine shaft may depend on environmental conditions. So, there is a chance that the barring motor is engaged with the gas turbine shaft after the turbine has completely stopped rotating. In this case, the barring motor must therefore have a rated power sufficient enough to overcome a high static friction of the gas turbine shaft. Hence, the modelling of the decaying speed of the gas turbine shaft may not be a suitable technique for accurately timing the drivable engagement of the barring motor with the gas turbine shaft.

### SUMMARY

According to a first aspect there is provided a system for use with a gas turbine engine having a gas turbine shaft and an accessory gearbox drivably coupled to the gas turbine shaft. The system includes an accessory of the accessory gearbox. The system further includes an output shaft drivably coupled between the accessory gearbox and the accessory. The system further includes a sensor configured to generate a sensor signal indicative of a position of the output shaft. The system further includes a controller communicably coupled to the sensor. The controller is configured to determine a speed of the output shaft based on the sensor signal. The controller is further configured to determine a speed of the gas turbine shaft based at least on the speed of the output shaft.

In some embodiments, the system further includes a prime mover, a drive shaft drivably coupled to the prime mover, and a clutch configured to selectively drivably engage the drive shaft with the output shaft.

In some embodiments, the controller is further configured to compare the speed of the gas turbine shaft with a predetermined threshold speed. The controller is further configured to control the clutch and/or the prime mover to drivably engage the drive shaft with the output shaft upon determining that the speed of the gas turbine shaft is less than the predetermined threshold speed.

Based on the sensor signal generated by the sensor, the controller is configured to determine the speed of the gas turbine shaft and then compare it with the predetermined threshold speed. Once the speed of the gas turbine shaft is below the predetermined threshold speed, the controller controls the clutch and/or the prime mover to drivably engage the drive shaft with the output shaft. In other words, once the speed of the gas turbine shaft is below the predetermined threshold speed, the prime mover drives the drive shaft to drive the output shaft, which further drives the gas turbine shaft through the accessory gearbox. As the gas turbine shaft is driven by the prime mover, components, such as compressors and turbines of the gas turbine engine, may rotate at low speeds during an engine shutdown.

Therefore, during the engine shutdown, the prime mover may drive the gas turbine shaft and rotate the turbine at a low speed only after the speed of the gas turbine shaft drops below the predetermined threshold speed. As the prime mover is drivably engaged with the gas turbine shaft only after the speed of the gas turbine shaft drops below the predetermined threshold speed, there may be no risk of overturning and damaging the prime mover due to inertia and residual rotational energy of the gas turbine shaft. As the drive shaft is drivably engaged with the output shaft only after the speed of the gas turbine shaft is less than the predetermined threshold speed, the system of the present disclosure may provide a safe mechanical engagement of the prime mover with the gas turbine shaft. The system of the present disclosure may therefore provide a means for accurate timing of the drivable engagement of the prime mover with the gas turbine shaft.

For precisely determining the timing of the drivable engagement of the prime mover with the gas turbine shaft, the system of the present disclosure does not use any modelling of the decaying speed of the gas turbine shaft that could have otherwise led to inaccurate timing of the drivable engagement of the prime mover with the gas turbine shaft. Moreover, the system of the present disclosure uses the sensor and the controller to determine a moment when the drive shaft should be drivably engaged with the output shaft of the accessory gearbox. Further, the system drivably engages the prime mover with the gas turbine shaft after the speed of the gas turbine shaft is less than the predetermined threshold speed, and before the speed of the gas turbine shaft reaches zero during the engine shutdown. As the prime mover is drivably engaged with the gas turbine shaft before the speed of the gas turbine shaft reaches zero during the engine shutdown, the system of the present disclosure may not require the prime mover to have a high rated power configuration.

In contrast to a conventional technique for measuring the speed of the gas turbine shaft by using variable reluctance sensors disposed on the gas turbine shaft, the system of the present disclosure is configured to determine the speed of the gas turbine shaft based at least on the speed of the output shaft, which is further based on the sensor signal indicative of the position of the output shaft. In other words, the system of the present disclosure determines the speed of the gas turbine shaft based on the sensor signal generated by the sensor disposed on the output shaft. The position of the output shaft may correspond to a rotational position of the output shaft. Further, the speed of the output shaft may correspond to a rotational speed of the output shaft. Further, in contrast to the conventional technique comprising use of the variable reluctance sensors disposed on the gas turbine shaft, the sensor signal in the system of the present disclosure may not drop with the decaying speed of the gas turbine shaft during the engine shutdown. Specifically, the position of the output shaft can be determined by the sensor irrespective of a magnitude of the speed of the output shaft. Therefore, even at low speeds of the gas turbine shaft, the sensor signal may be processed to determine the speed of the output shaft and eventually, the speed of the gas turbine shaft. Hence, during the engine shutdown, the system of the present disclosure may provide a safe drivable engagement of the prime mover with the gas turbine shaft.

In some embodiments, the controller is further configured to control the clutch and/or the prime mover to keep the drive shaft disengaged from the output shaft upon determining that the speed of the gas turbine shaft is greater than or equal to the predetermined threshold speed. Therefore, the prime mover is not drivably engaged with the gas turbine shaft unless the speed of the gas turbine shaft is less than the predetermined threshold speed. This may eliminate a risk of overturning and damaging the prime mover due to inertia and residual rotational energy of the gas turbine shaft when the speed of the gas turbine shaft is greater than or equal to the predetermined threshold speed.

In some embodiments, the controller is further configured to keep the prime mover in an inactive state upon determining that the speed of the gas turbine shaft is greater than or equal to the predetermined threshold speed. Keeping the prime mover in the inactive state keeps the drive shaft disengaged from the output shaft. Therefore, in some cases, the prime mover is kept in the inactive state unless the speed of the gas turbine shaft is less than the predetermined threshold speed. Keeping the prime mover in the inactive state may also eliminate the risk of overturning and damaging the prime mover due to inertia and residual rotational energy of the gas turbine shaft when the speed of the gas turbine shaft is greater than or equal to the predetermined threshold speed.

In some embodiments, the clutch is an active clutch communicably coupled to the controller and configured to be controlled by the controller. The controller is further configured to control the clutch and activate the prime mover to drivably engage the drive shaft with the output shaft upon determining that the speed of the gas turbine shaft is less than the predetermined threshold speed. Therefore, in cases where the clutch is the active clutch, the controller controls the clutch as well as activates the prime mover to drivably engage the drive shaft with the output shaft once the speed of the gas turbine shaft is less than the predetermined threshold speed.

In some embodiments, the controller is further configured to control the clutch to keep the drive shaft disengaged from the output shaft upon determining that the speed of the gas turbine shaft is greater than or equal to the predetermined threshold speed. Therefore, upon determining that the speed of the gas turbine shaft is greater than or equal to the predetermined threshold speed, the controller controls the clutch, such that the prime mover is kept disengaged from the gas turbine shaft. Keeping the prime mover disengaged from the gas turbine shaft may also eliminate the risk of overturning and damaging the prime mover due to inertia and residual rotational energy of the gas turbine shaft when the speed of the gas turbine shaft is greater than or equal to the predetermined threshold speed.

In some embodiments, the clutch is an overrunning clutch configured to drivably engage the drive shaft with the output shaft only if a speed of the drive shaft is greater than a speed of the output shaft. The controller is further configured to activate the prime mover to drivably engage the drive shaft with the output shaft upon determining that the speed of the gas turbine shaft is less than the predetermined threshold speed. Therefore, in cases where the clutch is the overrunning clutch, the controller activates the prime mover to drivably engage the prime mover with the gas turbine shaft once the speed of the gas turbine shaft is less than the predetermined threshold speed. Upon activation of the prime mover, the speed of the drive shaft becomes more than the speed of the output shaft, thereby causing the overrunning clutch to drivably engage the drive shaft with the output shaft.

In some embodiments, the system may further include an electronic module communicably coupled to the prime mover and the controller. The electronic module is configured to control the prime mover in response to a control signal received from the controller, such that the controller controls the prime mover via the electronic module. The electronic module may include a control circuit for keeping the prime mover in the active state or the inactive state. The electronic module may regulate a speed of the drive shaft and a direction of rotation of the drive shaft based on application requirements.

In some embodiments, the predetermined threshold speed is about 10 revolutions per minute (rpm). The predetermined threshold speed may vary based on application requirements.

In some embodiments, the accessory is a barring unit, and the prime mover is a barring motor disposed within the barring unit. Therefore, the controller is configured to control the clutch and/or the barring motor to drivably engage the barring motor with the gas turbine shaft upon determining that the speed of the gas turbine shaft is less than the predetermined threshold speed. In some cases, the controller is further configured to control the clutch and/or the barring motor to keep the barring motor disengaged from the gas turbine shaft upon determining that the speed of the gas turbine shaft is greater than or equal to the predetermined threshold speed. Therefore, the barring motor can be selectively drivably connected to and disconnected from the gas turbine shaft based on the comparison between the speed of the gas turbine shaft and the predetermined threshold speed.

In some embodiments, the sensor is disposed on the output shaft between the clutch and the accessory gearbox. This allows the controller to determine the speed of the output shaft based on the sensor signal. The controller is further configured to determine the speed of the gas turbine shaft based at least on the speed of the output shaft.

In some embodiments, the sensor is disposed on the output shaft. The output shaft is drivably coupled between the accessory gearbox and any accessory of the accessory gearbox.

In some embodiments, the system may further include a converter communicably coupled to the sensor and the controller. The converter is configured to receive the sensor signal from the sensor and convert the sensor signal into an output signal. The controller is further configured to receive the output signal and determine the speed of the output shaft based on the output signal. The sensor signal may be an analog signal (i.e., a voltage signal) and the output signal may be a digital signal. In such cases, the converter is an analog to digital converter. The converter may reduce a processing time in the controller.

In some embodiments, the sensor is a resolver or an encoder or a rotary variable differential transformer (RVDT) or a hall sensor array. The resolver may be used for determining the position of the output shaft by measuring degrees of rotation of the output shaft. The encoder may be used for determining the position of the output shaft by converting an angular position or motion of the output shaft to analog or digital signals. The RVDT may be used for determining the angular position of the output shaft by using an electromechanical transducer that outputs an alternating current voltage proportional to the angular displacement of the output shaft.

In some embodiments, the controller is configured to determine the speed of the gas turbine shaft based further on a gear ratio of the accessory gearbox. The gear ratio of the accessory gearbox is a predetermined ratio of the speed of the output shaft to the speed of the gas turbine shaft. The gear ratio of the accessory gearbox may be based on application requirements.

In some embodiments, there is provided a gas turbine engine. The gas turbine engine includes a gas turbine shaft and an accessory gearbox drivably coupled to the gas turbine shaft. The gas turbine engine further includes the system of the first aspect. The output shaft of the system is drivably coupled between the accessory gearbox and the accessory.

According to a second aspect there is provided a method for use with a gas turbine engine having a gas turbine shaft and an accessory gearbox drivably coupled to the gas turbine shaft. The method includes a step of determining a position of an output shaft drivably coupled between the accessory gearbox and an accessory of the accessory gearbox. The method further includes a step of determining a speed of the output shaft based on the position of the output shaft. The method further includes a step of determining a speed of the gas turbine shaft based at least on the speed of the output shaft.

In some embodiments, the method may further include providing a prime mover and a drive shaft drivably coupled to the prime mover. The method may further include a step of providing a clutch configured to selectively drivably engage the drive shaft with the output shaft.

In some embodiments, the method may further include a step of comparing the speed of the gas turbine shaft with a predetermined threshold speed. The method may further include a step of drivably engaging the drive shaft with the output shaft upon determining that the speed of the gas turbine shaft is less than the predetermined threshold speed.

The method enables drivable engagement of the prime mover with the gas turbine shaft after the speed of the gas turbine shaft is less than the predetermined threshold speed, and before the speed of the gas turbine shaft reaches zero during the engine shutdown. As the prime mover is drivably engaged with the gas turbine shaft before the speed of the gas turbine shaft reaches zero during the engine shutdown, the method of the present disclosure may not require the prime mover to have a high rated power configuration.

During the engine shutdown, the method of the present disclosure enables the drive shaft to rotate the turbine at the low speed once the speed of the gas turbine shaft is less than the predetermined threshold speed. As the method of the present disclosure includes drivable engagement of the drive shaft with the output shaft only after the speed of the gas turbine shaft drops below the predetermined threshold speed, there may be no risk of overturning and damaging the prime mover due to inertia and residual rotational energy of the gas turbine shaft. The method of the present disclosure may therefore provide a precise timing of the drivable engagement of the drive shaft with the output shaft. In other words, the method of the present disclosure may provide a safe drivable engagement of the drive shaft with the gas turbine shaft.

In some embodiments, drivably engaging the drive shaft with the output shaft further includes controlling the clutch and/or the prime mover to drivably engage the drive shaft with the output shaft.

In some embodiments, according to the method of the second aspect, the clutch is an overrunning clutch. Controlling the clutch and/or the prime mover further includes activating the prime mover, such that the clutch drivably engages the drive shaft with the output shaft.

In some embodiments, according to the method of the second aspect, the clutch is an active clutch. Controlling the clutch and/or the prime mover further includes activating the prime mover and controlling the clutch to drivably engage the drive shaft with the output shaft.

In some embodiments, the method further includes keeping the drive shaft disengaged from the output shaft upon determining that the speed of the gas turbine shaft is greater than or equal to the predetermined threshold speed.

According to a third aspect there is provided an apparatus for use with a gas turbine engine having a gas turbine shaft and an accessory gearbox drivably coupled to the gas turbine shaft. The apparatus includes a controller configured to: determine a position of an output shaft drivably coupled between the accessory gearbox and an accessory of the accessory gearbox; determine a speed of the output shaft based on the position of the output shaft; and determine a speed of the gas turbine shaft based at least on the speed of the output shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise the gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e., the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e., the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e., the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely byway of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e., the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e., the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example, where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000 ft (10668 m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic block diagram illustrating an accessory gearbox and various accessories of the accessory gearbox of the gas turbine engine of **Figure 1****;**
**Figure 5** is a schematic block diagram of a system for use with the gas turbine engine of **Figure 1****,** according to an embodiment of the present disclosure;
**Figure 6A** is a schematic block diagram of a system for use with the gas turbine engine of **Figure 1****,** according to another embodiment of the present disclosure;
**Figure 6B** is a schematic block diagram of the system of **Figure 6A** in an engaged configuration;
**Figure 7** is a flowchart for a process implemented by the system of **Figures 6A** **and** **6B****,** according to an embodiment of the present disclosure;
**Figure 8A** is a schematic block diagram of a system for use with the gas turbine engine of **Figure 1****,** according to another embodiment of the present disclosure;
**Figure 8B** is a schematic block diagram of the system of **Figure 8A** in an engaged configuration;
**Figure 9** is a flowchart illustrating a process implemented by the system of **Figures 8A** **and** **8B****,** according to an embodiment of the present disclosure;
**Figure 10** is a graph illustrating a time variation of a speed of a gas turbine shaft of the gas turbine engine of **Figure 1****,** according to an embodiment of the present disclosure; and
**Figure 11** is a flowchart illustrating a method for use with the gas turbine engine of **Figure 1****,** according to an embodiment of the present disclosure.

### DETAILED DESCRIPTION

Aspects and embodiments of the present disclosure will now be discussed with reference to the accompanying figures. Further aspects and embodiments will be apparent to those skilled in the art.

As used herein, the term "configured to" and like is at least as restrictive as the term "adapted to" and requires actual design intention to perform the specified function rather than mere physical capability of performing such a function.

As used herein, the term "communicably coupled to" refers to direct coupling between components and/or indirect coupling between components via one or more intervening components. Such components and intervening components may comprise, but are not limited to, junctions, communication paths, wireless networks, components, circuit elements, circuits, functional blocks, and/or devices. As an example of indirect coupling, a signal conveyed from a first component to a second component may be modified by one or more intervening components by modifying the form, nature, or format of information in a signal, while one or more elements of the information in the signal are nevertheless conveyed in a manner than can be recognized by the second component.

As used herein, the term "signal," includes, but is not limited to, one or more electrical signals, optical signals, electromagnetic signals, analog and/or digital signals, one or more computer instructions, a bit and/or bit stream, or the like.

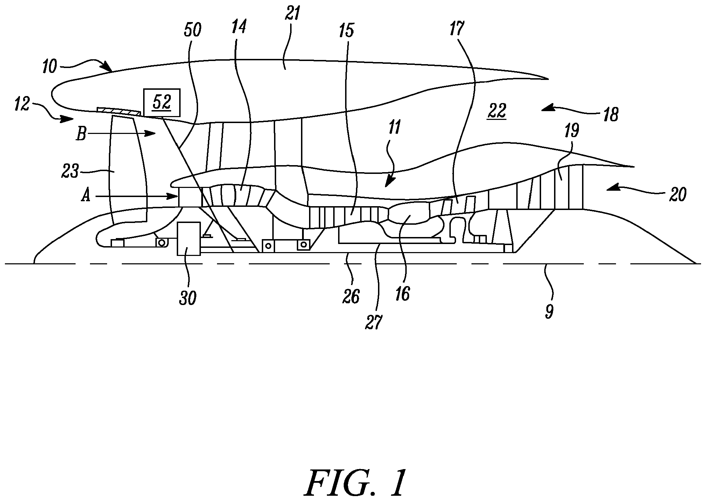

Figure 1 illustrates a gas turbine engine 10 having a principal rotational axis 9. The gas turbine engine 10 comprises an air intake 12 and a propulsive fan 23 that generates two airflows: a core airflow A and a bypass airflow B. The gas turbine engine 10 comprises a core 11 that receives the core airflow A. The core 11 comprises, in axial flow series, a low pressure compressor 14, a high pressure compressor 15, combustor 16, a high pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via an input shaft 26 and an epicyclic gearbox 30.

The gas turbine engine 10 further includes a gas turbine shaft 50 and an accessory gearbox 52 drivably coupled to the gas turbine shaft 50. During normal operation of the gas turbine engine 10, the accessory gearbox 52 is powered or driven by the input shaft 26 via the gas turbine shaft 50 and a gear arrangement comprising gears (not shown) and shafts. The accessory gearbox 52 will be discussed later in the description.

In use, the core airflow A is accelerated and compressed by the low pressure compressor 14 and directed into the high pressure compressor 15 where further compression takes place. The compressed air exhausted from the high pressure compressor 15 is directed into the combustor 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. In some cases, the accessory gearbox 52 and the gas turbine shaft 50 may be driven by the interconnecting shaft 27. The fan 23 generally provides the majority of the propulsive thrust. The epicyclic gearbox 30 is a reduction gearbox.

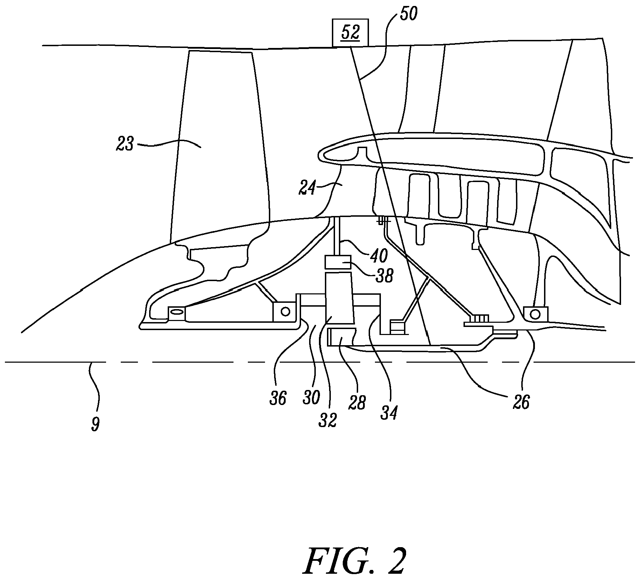

An exemplary arrangement for a geared fan gas turbine engine 10 is shown in Figure 2. The low pressure turbine 19 (see Figure 1) drives the input shaft 26, which is coupled to a sun wheel, or sun gear, 28 of the epicyclic gearbox 30. Radially outwardly of the sun gear 28 and intermeshing therewith is a plurality of planet gears 32 that are coupled together by a planet carrier 34. The planet carrier 34 constrains the planet gears 32 to process around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the input shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

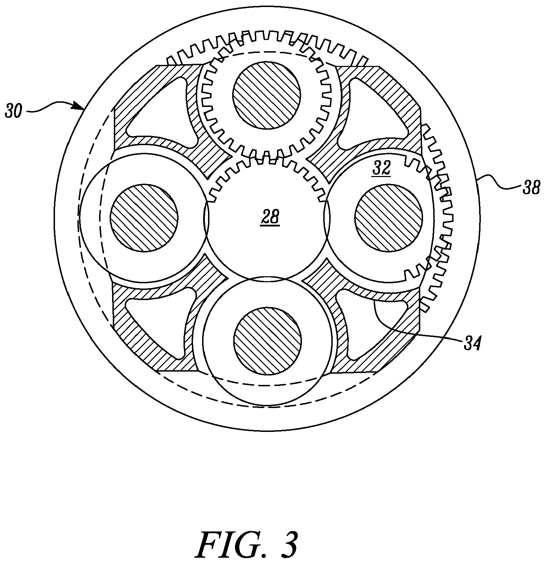

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the gas turbine engine 10 and/or for connecting the gearbox 30 to the gas turbine engine 10. By way of further example, the connections (such as the linkages 36, 40 in the Figure 2 example) between the gearbox 30 and other parts of the gas turbine engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g., the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30. In some other arrangements, the gas turbine engine 10 may comprise a direct drive.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In addition, the present invention is equally applicable to aero gas turbine engines, marine gas turbine engines and land-based gas turbine engines.

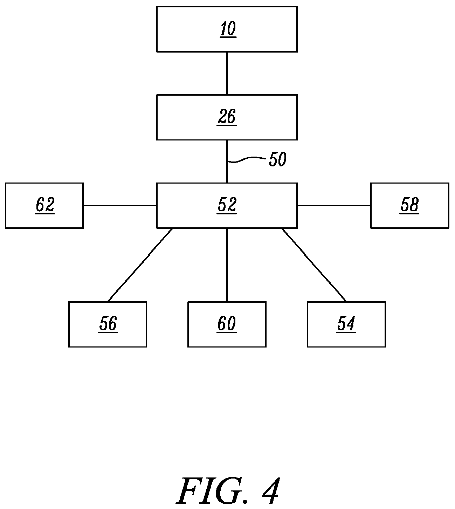

Figure 4 is a schematic block diagram illustrating the accessory gearbox 52 and various accessories. During operation of the gas turbine engine 10, the accessory gearbox 52 may drive various accessories, such as a fuel pump 54, an oil pump 56, an electric generator 58, and an oil breather 60. In some cases, the accessory gearbox 52 may also drive other accessories as well, such as a fuel flow governor, a starter motor, a tachometer, and so on. The accessory gear box 52 may also be selectively drivably coupled with a barring unit 62. The barring unit 62 may also be considered as an accessory of the accessory gearbox 52.

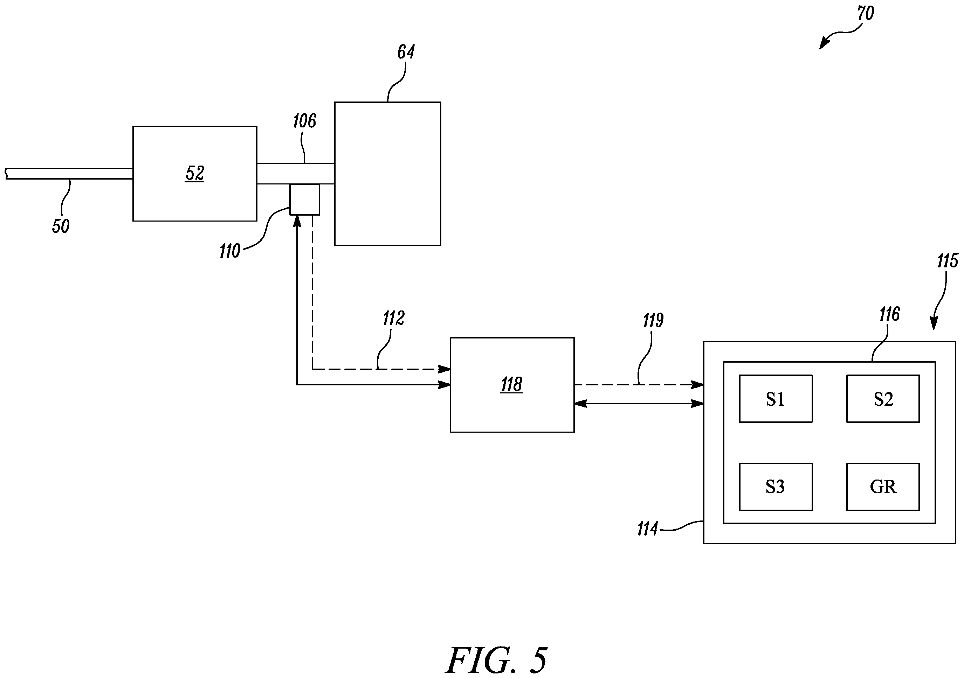

Figure 5 is a schematic block diagram of a system 70 for use with the gas turbine engine 10 (shown in Figure 1), according to an embodiment of the present disclosure. In some embodiments, the gas turbine engine 10 includes the system 70. In other words, the system 70 may be a part of the gas turbine engine 10. The system 70 includes an accessory 64 of the accessory gearbox 52. The accessory 64 may include any of the accessories illustrated in Figure 4, such as the barring unit 62, the fuel pump 54, the oil pump 56, the electric generator 58, and the oil breather 60.

The system 70 further includes an output shaft 106 drivably coupled between the accessory gearbox 52 and the accessory 64 of the accessory gearbox 52. During the normal operation of the gas turbine engine 10 (shown in Figure 1), the output shaft 106 is driven by the accessory gearbox 52. The system 70 further includes a sensor 110 configured to generate a sensor signal 112 indicative of a position of the output shaft 106. The position of the output shaft 106 may correspond to a rotational position of the output shaft 106. The sensor signal 112 is an electrical signal, either analog or digital. In the illustrated embodiment of Figure 5, the sensor 110 is disposed on the output shaft 106.

In some embodiments, the sensor 110 is a resolver or an encoder or a rotary variable differential transformer (RVDT) or a hall sensor array. When used as the resolver or encoder, the sensor 110 is configured to determine the position of the output shaft 106 by measuring degrees of rotation of the output shaft 106. Generally, a resolver includes a rotary angular position sensor, such as a rotating electrical transformer having stator windings and optional rotor windings. A magnitude of the energy through the stator windings and rotor windings varies sinusoidally as the output shaft 106 rotates. Based on relative angular positions of the stator windings and rotor windings, the resolver is configured to output the sensor signal 112 indicative of the position of the output shaft 106.

The encoder provides an output corresponding to the rotation of the output shaft 106, either in terms of voltage pulses or absolute angular position. In some applications, the encoder may consist of two plates, with one plate fixed and another plate with unique coding attached to the output shaft 106. As the output shaft 106 rotates, these plates rotate relative to each other without making contact. An electric field between these plates is influenced in response to the relative rotation and that variation represents the angular position of the output shaft 106 in the form of the sensor signal 112.

When used as the RVDT, the sensor 110 is used for determining the angular position of the output shaft 106 by using an electromechanical transducer that outputs an alternating current voltage proportional to the angular displacement of the output shaft 106. While using the sensor 110 as the hall sensor array, the sensor 110 measures a changing voltage when the output shaft 106 is placed in a magnetic field. In other words, once a Hall sensor array detects that it is now in a magnetic field, it can be used to sense the position of objects.

Figure 5 further illustrates an apparatus 115 for use with the gas turbine engine 10. The system 70 as well as the apparatus 115 further includes a controller 114 communicably coupled to the sensor 110. In an application, the controller 114 may be a control circuit, a computer, a microprocessor, a microcomputer, a central processing unit, or any suitable device or apparatus. The controller 114 may comprise one or more of a digital processor, an analog processor, a digital circuit designed to process information, an analog circuit designed to process information, a state machine, and/or other mechanisms for electronically processing information. The controller 114 further includes a memory 116. The memory 116 may be configured to store a set of instructions executed by the controller 114.

The system 70 may further includes a converter 118 communicably coupled to the sensor 110 and the controller 114. The converter 118 is configured to receive the sensor signal 112 from the sensor 110 and convert the sensor signal 112 into an output signal 119. In some embodiments, the converter 118 is an analog to digital converter, the sensor signal 112 is an analog signal, and the output signal 119 is a digital signal. The output signal 119 is indicative of the position of the output shaft 106. The controller 114 is further configured to receive the output signal 119 and determine a speed S1 of the output shaft 106 based on the output signal 119. As the output signal 119 is based on the sensor signal 112, it can be stated that the controller 114 is configured to determine the speed S1 of the output shaft 106 based on the sensor signal 112. In some embodiments, the converter 118 may be a part of the controller 114. The speed S1 of the output shaft 106 is stored in the memory 116. The speed S1 may correspond to a rotational speed of the output shaft 106.

The controller 114 is further configured to determine a speed S2 of the gas turbine shaft 50 based at least on the speed S1 of the output shaft 106. The speed S2 may correspond to a rotational speed of the gas turbine shaft 50. Specifically, the controller 114 is configured to determine the speed S2 of the gas turbine shaft 50 based further on a gear ratio GR of the accessory gearbox 52. The gear ratio GR of the accessory gearbox 52 is a predetermined ratio of the speed S1 of the output shaft 106 to the speed S2 of the gas turbine shaft 50. Therefore, the controller 114 is configured to determine the speed S2 of the gas turbine shaft 50 based on the speed S1 of the output shaft 106 and the gear ratio GR (S1/S2) of the accessory gearbox. The speed S2 of the gas turbine shaft 50 is stored in the memory 116.

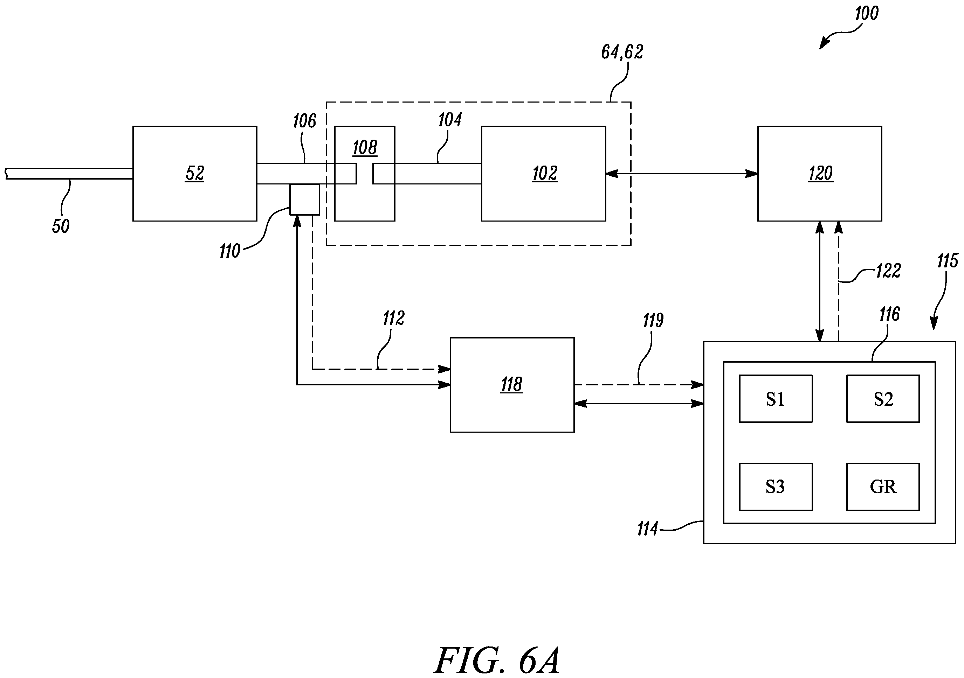

Figure 6A is a schematic block diagram of a system 100 for use with the gas turbine engine 10 (shown in Figure 1), according to an embodiment of the present disclosure. In some embodiments, the gas turbine engine 10 includes the system 100. In other words, the system 100 may be a part of the gas turbine engine 10. The system 100 is substantially similar to the system 70 illustrated in Figure 5, with common components being referred to by the same reference numerals. However, in the system 100, the accessory 64 is the barring unit 62.

The system 100 further includes a prime mover 102. In the illustrated embodiment of Figure 6A, the prime mover 102 is a barring motor disposed within the barring unit 62. The barring motor is usually an electric motor, which can be selectively connected to and disconnected from the accessory gearbox 52 and/or the gas turbine shaft 50 in response to a request. Generally, the prime mover 102 (e.g., the barring motor) is used to rotate various components (the high pressure turbine 17, the high pressure compressor 15, etc., shown in Figure 1) at a low speed in order to prevent bowing of the gas turbine shaft 50 during engine shutdown and engine start up conditions. In some cases, the prime mover 102 may be driven by a generator. In some cases, the prime mover 102 (e.g., the barring motor) may be supplied with electrical energy that is converted into a mechanical torque used to assist a starter, an electric starter generator, or other starter, during the engine start up.

The system 100 further includes a drive shaft 104 drivably coupled to the prime mover 102. The system 100 further includes a clutch 108 configured to selectively drivably engage the drive shaft 104 with the output shaft 106. In the illustrated embodiment of Figure 6A, the drive shaft 104 is disengaged from the output shaft 106. Further, in the illustrated embodiment of Figure 6A, the clutch 108 is an overrunning clutch. In general, an overrunning clutch or a freewheel transfers power in only one direction and is adapted to disengage a driveshaft from a driven shaft when the driven shaft rotates faster than the driveshaft.

In the illustrated embodiment of Figure 6A, the sensor 110 is disposed on the output shaft 106 between the clutch 108 and the accessory gearbox 52. In some embodiments, the sensor 110 may be disposed on another output shaft (not shown) between the accessory gearbox 52 and an accessory 64 other than the barring unit 62.

The controller 114 is further configured to compare the speed S2 of the gas turbine shaft 50 with a predetermined threshold speed S3 (stored in the memory 116). The predetermined threshold speed S3 may be selected based on specifications of the gas turbine engine 10 (shown in Figure 1). In some embodiments, the predetermined threshold speed S3 is about 10 revolutions per minute (rpm) of the gas turbine shaft 50.

The system 100 may further include an electronic module 120 communicably coupled to the prime mover 102 and the controller 114. The electronic module 120 is configured to control the prime mover 102 in response to a control signal 122 received from the controller 114, such that the controller 114 controls the prime mover 102 via the electronic module 120. The electronic module 120 may include a power electronics unit to control the prime mover 102. The electronic module 120 may include a control circuit for switching the prime mover 102 between an active state and an inactive state. The control circuit can also keep the prime mover 102 in the active state or the inactive state. The electronic module 120 module may further regulate the speed of the drive shaft 104 and a direction of rotation of the drive shaft 104 based on application requirements. In some embodiments, the electronic module 120 may be a part of the controller 114.

The controller 114 is further configured to keep the prime mover 102 in the inactive state upon determining that the speed S2 of the gas turbine shaft 50 is greater than or equal to the predetermined threshold speed S3 (i.e., S2 ≥ S3). In the illustrated embodiment of Figure 6A, in response to the control signal 122, the electronic module 120 keeps the prime mover 102 in the inactive state to keep the drive shaft 104 disengaged from the output shaft 106 upon determining that the speed S2 of the gas turbine shaft 50 is greater than or equal to the predetermined threshold speed S3. Specifically, upon determining that the speed S2 of the gas turbine shaft 50 is greater than or equal to the predetermined threshold speed S3, the controller 114 sends the control signal 122 to the electronic module 120, such that the electronic module 120 keeps the prime mover 102 in the inactive state to keep the drive shaft 104 disengaged from the output shaft 106.

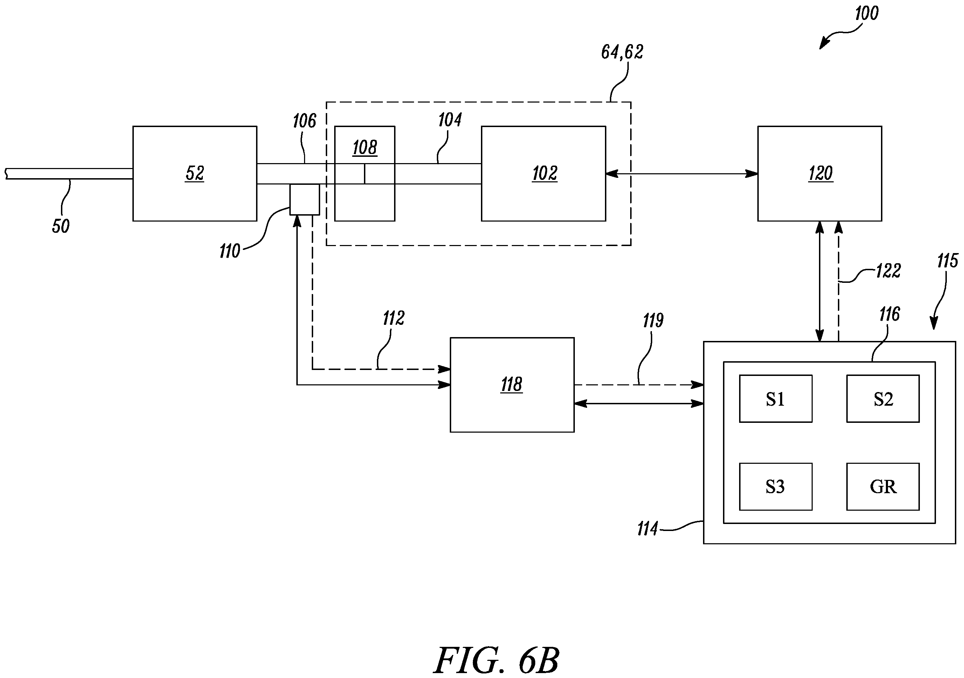

With reference to embodiment illustrated in Figure 6A, the clutch 108 (i.e., the overrunning clutch) is configured to drivably engage the drive shaft 104 with the output shaft 106 only if a speed of the drive shaft 104 is greater than the speed S1 of the output shaft 106. Therefore, as the clutch 108 is the overrunning clutch, the clutch 108 is configured to transfer power from the drive shaft 104 to the output shaft 106, and not vice versa. Figure 6B is a schematic block diagram of the system 100 wherein the drive shaft 104 is illustrated as drivably engaged with the output shaft 106.

The controller 114 is further configured to activate the prime mover 102 to drivably engage the drive shaft 104 with the output shaft 106 upon determining that the speed S2 of the gas turbine shaft 50 is less than the predetermined threshold speed S3 (i.e., S2 < S3). Specifically, with reference to Figure 6B, upon determining that the speed S2 of the gas turbine shaft 50 is less than the predetermined threshold speed S3, the controller 114 sends the control signal 122 to the electronic module 120, such that the electronic module 120 activates the prime mover 102 to drivably engage the drive shaft 104 with the output shaft 106. In other words, the controller 114 is configured to activate the prime mover 102 to drivably engage the prime mover 102 with the gas turbine shaft 50 upon determining that the speed S2 of the gas turbine shaft 50 is less than the predetermined threshold speed S3. The clutch 108 drivably engages the drive shaft 104 with the output shaft 106 upon activation of the prime mover 102 as the speed of the drive shaft 104 is greater than the speed of the output shaft 106.

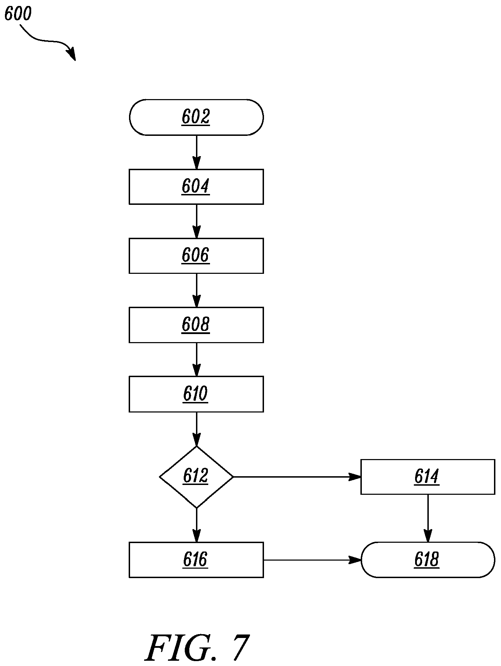

Figure 7 is a flowchart for a process 600 implemented by the system 100 of Figures 6A and 6B, according to an embodiment of the present disclosure. The process 600 is embodied as an algorithm implemented by the system 100 (shown in Figures 6A and 6B) including the controller 114. Further, the process 600 may be stored in the memory 116 in the form of instructions executable by the controller 114.

At step 602, the process 600 begins. Referring to Figures 6A, 6B, and 7, at step 604, the sensor 110 generates the sensor signal 112 indicative of the position of the output shaft 106. Thus, at the step 604, the process 600 includes determining the position of the output shaft 106. The process 600 further moves to step 606.

At the step 606, the controller 114 determines the speed S1 of the output shaft 106 based on the sensor signal 112. The process 600 further moves to step 608. At the step 608, the controller 114 determines the speed S2 of the gas turbine shaft 50 based on the speed S1 of the output shaft 106 and the gear ratio GR of the accessory gearbox 52. The process 600 further moves to step 610. At the step 610, the controller 114 compares the speed S2 of the gas turbine shaft 50 with the predetermined threshold speed S3. The process 600 further moves to step 612.

At the step 612, the controller 114 determines if the speed S2 of the gas turbine shaft 50 is less than the predetermined threshold speed S3. Upon determining that the speed S2 of the gas turbine shaft 50 is less than the predetermined threshold speed S3, the process 600 moves to step 614. With reference to Figures 6B and 7, at the step 614, the controller 114 activates the prime mover 102 to drivably engage the drive shaft 104 with the output shaft 106. Specifically, the controller 114 sends the control signal 122 to the electronic module 120 to activate the prime mover 102. Once the prime mover 102 is activated and the speed of the drive shaft 104 is greater than the speed S1 of the output shaft 106, the clutch 108 (i.e., the overrunning clutch) drivably engages the drive shaft 104 with the output shaft 106. Therefore, upon determining that the speed S2 of the gas turbine shaft 50 is less than the predetermined threshold speed S3, the controller 114 drivably engages the prime mover 102 with the gas turbine shaft 50. The process 600 further moves to step 618 where the process 600 is terminated.

Upon determining that the speed S2 of the gas turbine shaft 50 is greater than or equal to the predetermined threshold speed S3 at the step 612, the process 600 moves to step 616. With reference to Figures 6A and 7, at the step 616, the controller 114 keeps the prime mover 102 in the inactive state. Specifically, the controller 114 sends the control signal 122 to the electronic module 120 to keep the prime mover 102 in the inactive state. As the prime mover 102 is the inactive state, the clutch 108 (i.e., the overrunning clutch) keeps the drive shaft 104 disengaged from the output shaft 106. Therefore, upon determining that the speed S2 of the gas turbine shaft 50 is greater than or equal to the predetermined threshold speed S3, the controller 114 keeps the prime mover 102 disengaged from the gas turbine shaft 50. The process 600 further moves to step 618 where the process 600 is terminated.

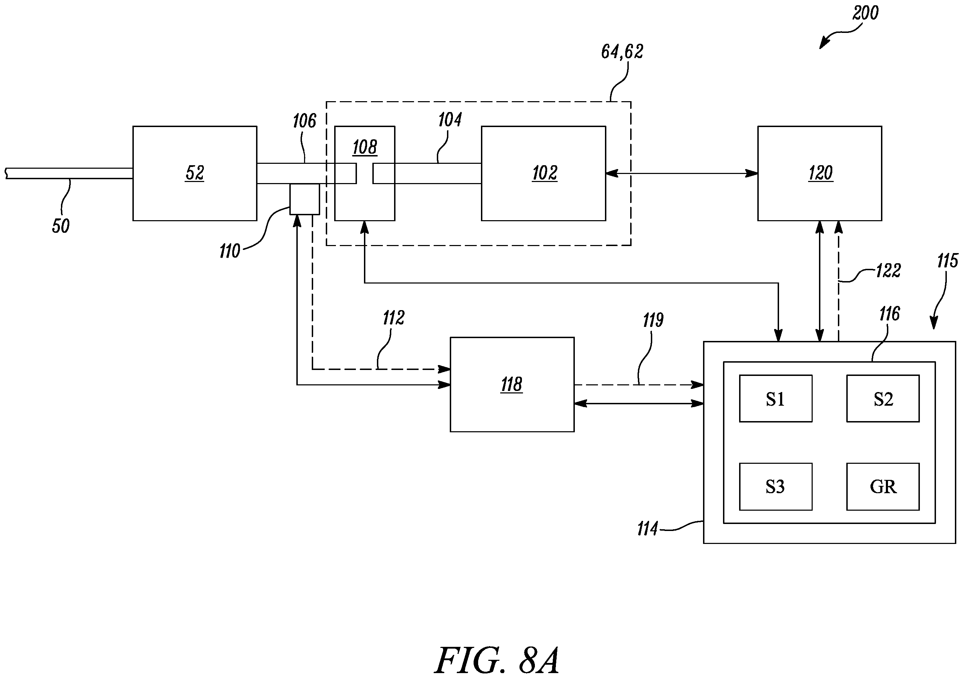

Figure 8A is a schematic block diagram of a system 200 for use with the gas turbine engine 10 (shown in Figure 1), according to an embodiment of the present disclosure. In some embodiments, the gas turbine engine 10 includes the system 200. In other words, the system 200 may be a part of the gas turbine engine 10. The system 200 is substantially similar to the system 100 illustrated in Figure 6A, with common components being referred to by the same reference numerals. However, in the system 200, the clutch 108 is an active clutch communicably coupled to the controller 114 and configured to be controlled by the controller 114.

In contrast to the overrunning clutch (i.e., the clutch 108 in Figures 6A and 6B), the active clutch (i.e., the clutch 108 in Figure 8A) is configured to transfer power from the drive shaft 104 to the output shaft 106 and vice versa, depending on a position of the clutch 108.

In some embodiments, the clutch 108 is hydraulically actuated by the controller 114 between a disengaged state and an engaged state. A hydraulic actuating unit (not shown) may be provided to enable the controller 114 to hydraulically actuate the clutch 108.

With reference to Figure 8A, in response to the control signal 122, the controller 114 is configured to control the clutch 108 to keep the drive shaft 104 disengaged from the output shaft 106 upon determining that the speed S2 of the gas turbine shaft 50 is greater than or equal to the predetermined threshold speed S3.

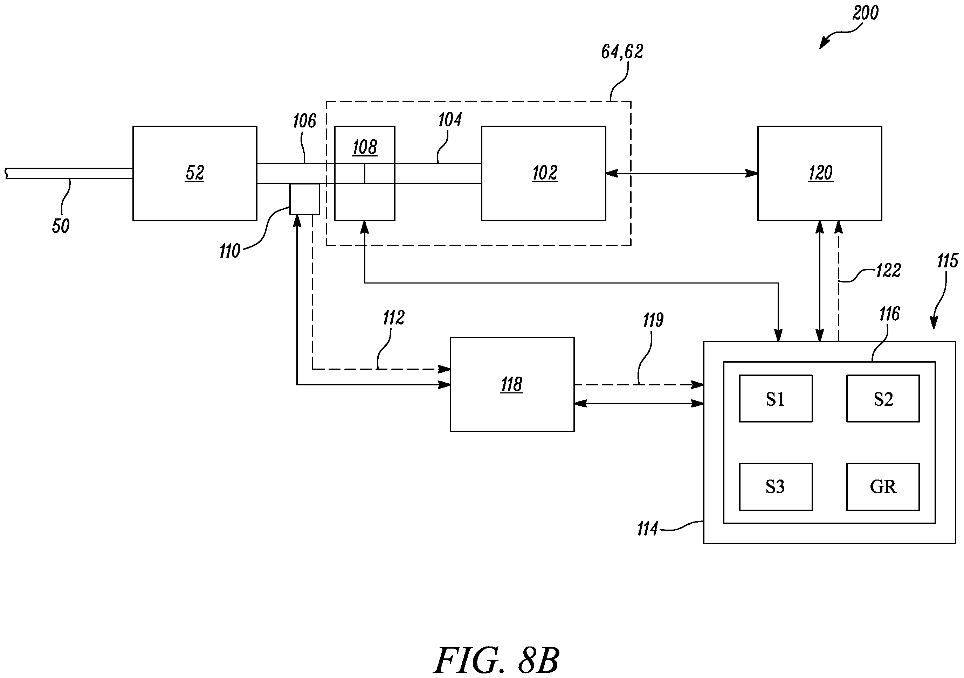

Figure 8B is a schematic block diagram of the system 200 wherein the drive shaft 104 is illustrated as drivably engaged with the output shaft 106. The controller 114 is further configured to control the clutch 108 and activate the prime mover 102 to drivably engage the drive shaft 104 with the output shaft 106 upon determining that the speed S2 of the gas turbine shaft 50 is less than the predetermined threshold speed S3. Specifically, with reference to Figure 8B, upon determining that the speed S2 of the gas turbine shaft 50 is less than the predetermined threshold speed S3, the controller 114 controls the clutch 108 and sends the control signal 122 to the electronic module 120 to activate the prime mover 102, such that the drive shaft 104 is drivably engaged with the output shaft 106. In other words, the controller 114 is configured to control the clutch 108 and activate the prime mover 102 to drivably engage the prime mover 102 with the gas turbine shaft 50 upon determining that the speed S2 of the gas turbine shaft 50 is less than the predetermined threshold speed S3.

As stated earlier with reference to Figure 6A, the controller 114 is configured to keep the prime mover 102 in the inactive state upon determining that the speed S2 of the gas turbine shaft 50 is greater than or equal to the predetermined threshold speed S3. Also, as stated above with reference to Figure 8A, the controller 114 is configured to control the clutch 108 (i.e., the active clutch) to keep the drive shaft 104 disengaged from the output shaft 106 upon determining that the speed S2 of the gas turbine shaft 50 is greater than or equal to the predetermined threshold speed S3. Therefore, with reference to Figures 6A and 8A, it can be stated that the controller 114 is configured to control the clutch 108 (i.e., the active clutch in Figure 8A) and/or the prime mover 102 (inactive state in Figure 6A) to keep the drive shaft 104 disengaged from the output shaft 106 upon determining that the speed S2 of the gas turbine shaft 50 is greater than or equal to the predetermined threshold speed S3.

As stated earlier with reference to Figure 6B, the controller 114 is configured to activate the prime mover 102 to drivably engage the drive shaft 104 with the output shaft 106 upon determining that the speed S2 of the gas turbine shaft 50 is less than the predetermined threshold speed S3. Also, as stated above with reference to Figure 8B, the controller 114 is configured to control the clutch 108 (i.e., the active clutch in Figure 8B) and activate the prime mover 102 to drivably engage the drive shaft 104 with the output shaft 106 upon determining that the speed S2 of the gas turbine shaft 50 is less than the predetermined threshold speed S3. Therefore, with reference to Figures 6B and 8B, it can be stated that the controller 114 is configured to control the clutch 108 (i.e., the active clutch in Figure 8B) and/or the prime mover 102 to drivably engage the drive shaft 104 with the output shaft 106 upon determining that the speed S2 of the gas turbine shaft 50 is less than the predetermined threshold speed S3.

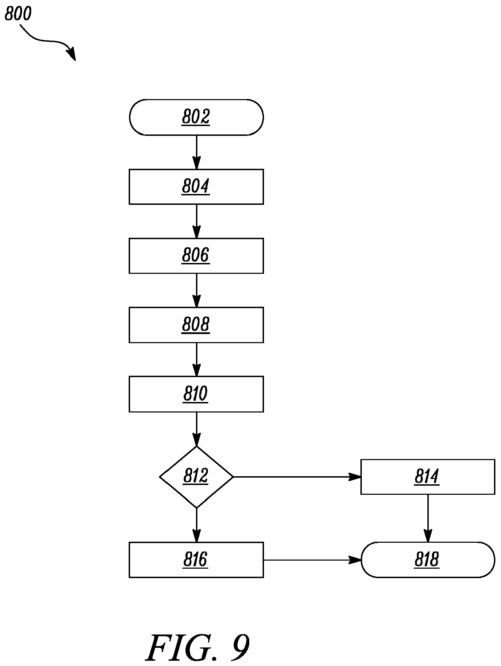

Figure 9 is a flowchart for a process 800 implemented by the system 200 of Figures 8A and 8B, according to an embodiment of the present disclosure. The process 800 is embodied as an algorithm implemented by the system 200 (shown in FIGS. 7A and 7B) including the controller 114. Further, the process 800 may be stored in the memory 116 in the form of instructions executable by the controller 114.

At step 802, the process 800 begins. In the process 800, steps 804, 806, 808, 810, and 812 are the same as the steps 604, 606, 608, 610, and 612, respectively, of the process 600 of FIG. 6. As already stated above, at the step 812, the controller 114 determines if the speed S2 of the gas turbine shaft 50 is less than the predetermined threshold speed S3. Upon determining that the speed S2 of the gas turbine shaft 50 is less than the predetermined threshold speed S3, the process 800 moves to step 814.

With reference to Figures 8B and 9, at the step 814, the controller 114 controls the clutch 108 (i.e., the active clutch) and activates the prime mover 102 to drivably engage the drive shaft 104 with the output shaft 106. Specifically, at the step 814, the controller 114 controls the clutch 108 and sends the control signal 122 to the electronic module 120 to activate the prime mover 102, such that the drive shaft 104 is engaged with the output shaft 106. Therefore, upon determining that the speed S2 of the gas turbine shaft 50 is less than the predetermined threshold speed S3, the controller 114 drivably engages the prime mover 102 with the gas turbine shaft 50. The process 800 further moves to step 818 where the process 800 is terminated.

Upon determining that the speed S2 of the gas turbine shaft 50 is greater than or equal to the predetermined threshold speed S3 at the step 812, the process 800 moves to step 816. With reference to Figures 8A and 9, at the step 816, the controller 114 controls the clutch 108 (i.e., the active clutch) to keep the drive shaft 104 disengaged from the output shaft 106. The controller 114 may also keep the prime mover 102 in the inactive state. Therefore, upon determining that the speed S2 of the gas turbine shaft 50 is greater than or equal to the predetermined threshold speed S3, the controller 114 keeps the prime mover 102 disengaged from the gas turbine shaft 50 and the prime mover 102 in the inactive state. The process 800 further moves to step 818 where the process 800 is terminated.

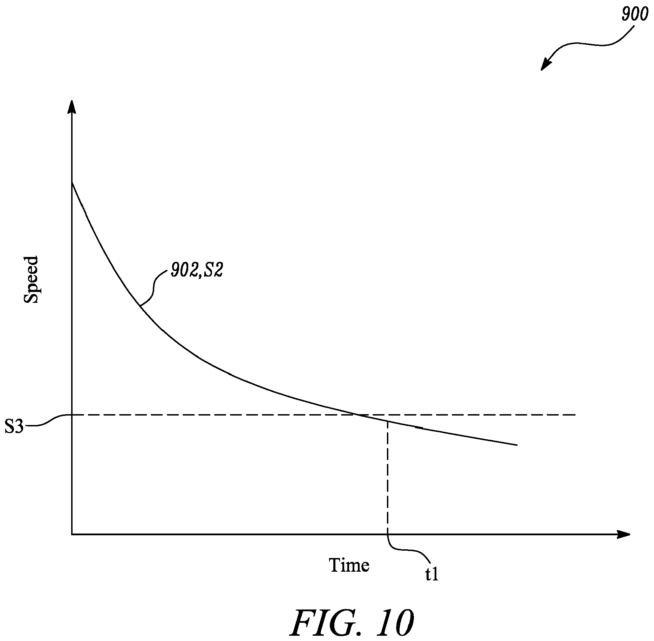

Figure 10 is a graph 900 illustrating a variation in the speed S2 of the gas turbine shaft 50 (shown in Figures 1 and 2) with time, according to an embodiment of the present disclosure. As illustrated in the graph 900, speed is depicted in arbitrary units (a.u.) on the ordinate. Time is depicted on the abscissa.

Referring to Figures 6A, 6B, 8A, 8B, and 9, the graph 900 includes a curve 902 depicting the variation in the speed S2 of the gas turbine shaft 50 with time. Once the speed S2 of the gas turbine shaft 50 is less than the predetermined threshold speed S3, the controller 114 controls the clutch 108 and/or the prime mover 102 to drivably engage the drive shaft 104 with the output shaft 106 at time t1. Therefore, once the speed S2 of the gas turbine shaft 50 is less than the predetermined threshold speed S3, the controller 114 drivably engages the prime mover 102 with the gas turbine shaft 50 at the time t1.

With reference to Figures 1, 6A, 6B, 8A, and 8B, based on the sensor signal 112 generated by the sensor 110, the controller 114 is configured to determine the speed S2 of the gas turbine shaft 50 and then compare it with the predetermined threshold speed S3. Once the speed S2 of the gas turbine shaft 50 is below the predetermined threshold speed S3, the prime mover 102 drives the drive shaft 104 to drive the output shaft 106, which further drives the gas turbine shaft 50 through the accessory gearbox 52. As the gas turbine shaft 50 is driven by the prime mover 102, components, such as compressors and turbines, of the gas turbine engine 10 may rotate at low speeds during the engine shutdown.

Therefore, during the engine shutdown, the prime mover 102 may drive the gas turbine shaft 50 and rotate the high pressure turbine 17 at a low speed only after the speed S2 of the gas turbine shaft 50 drops below the predetermined threshold speed S3. As the prime mover 102 is drivably engaged with the gas turbine shaft 50 only after the speed S2 of the gas turbine shaft 50 drops below the predetermined threshold speed S3, there may be no risk of overturning and damaging the prime mover 102 due to inertia and residual rotational energy of the gas turbine shaft 50. The drivable engagement of the drive shaft 104 with the output shaft 106 of the accessory gearbox 52 after the speed S2 of the gas turbine shaft 50 is less than the predetermined threshold speed S3 may provide a safe mechanical engagement of the prime mover 102 with the gas turbine shaft 50. Each of the systems 100, 200 may therefore provide a means for accurate timing of the drivable engagement of the prime mover 102 with the gas turbine shaft 50.

For precisely determining the timing of the drivable engagement of the prime mover 102 with the gas turbine shaft 50, each of the systems 100, 200 does not use any modelling of the decaying speed S2 of the gas turbine shaft 50 that could have otherwise led to inaccurate timing of the drivable engagement of the prime mover 102 with the gas turbine shaft 50. Moreover, each of the systems 100, 200 uses the sensor 110 and the controller 114 to determine a moment when the drive shaft 104 should be drivably engaged with the output shaft 106 of the accessory gearbox 52. Therefore, each of the systems 100, 200 drivably engages the prime mover 102 with the gas turbine shaft 50 after the speed S2 of the gas turbine shaft 50 is less than the predetermined threshold speed S3, and before the speed S2 of the gas turbine shaft 50 reaches zero during the engine shutdown. As the prime mover 102 is drivably engaged with the gas turbine shaft 50 before the speed S2 of the gas turbine shaft 50 reaches zero during the engine shutdown, each of the systems 100, 200 of the present disclosure may not require the prime mover 102 to have a high rated power configuration.

In contrast to a conventional technique for measuring the speed S2 of the gas turbine shaft 50 by using variable reluctance sensors disposed on the gas turbine shaft 50, each of the systems 100, 200 of the present disclosure is configured to determine the speed S2 of the gas turbine shaft 50 based at least on the speed S1 of the output shaft 106, which is further based on the sensor signal 112 indicative of the position of the output shaft 106. In other words, each of the systems 100, 200 determines the speed S2 of the gas turbine shaft 50 based on the sensor signal 112 generated by the sensor 110 disposed on the output shaft 106. Further, in contrast to the conventional technique comprising use of the variable reluctance sensors disposed on the gas turbine shaft 50, the sensor signal 112 in each of the systems 100, 200 may not drop with the decaying speed S2 of the gas turbine shaft 50 during the engine shutdown. Therefore, even at low speeds of the gas turbine shaft 50, the sensor signal 112 may be processed to determine the speed S1 of the output shaft 106 and eventually, the speed S2 of the gas turbine shaft 50. Hence, during the engine shutdown, each of the systems 100, 200 may provide a safe drivable engagement of the prime mover 102 with the gas turbine shaft 50.

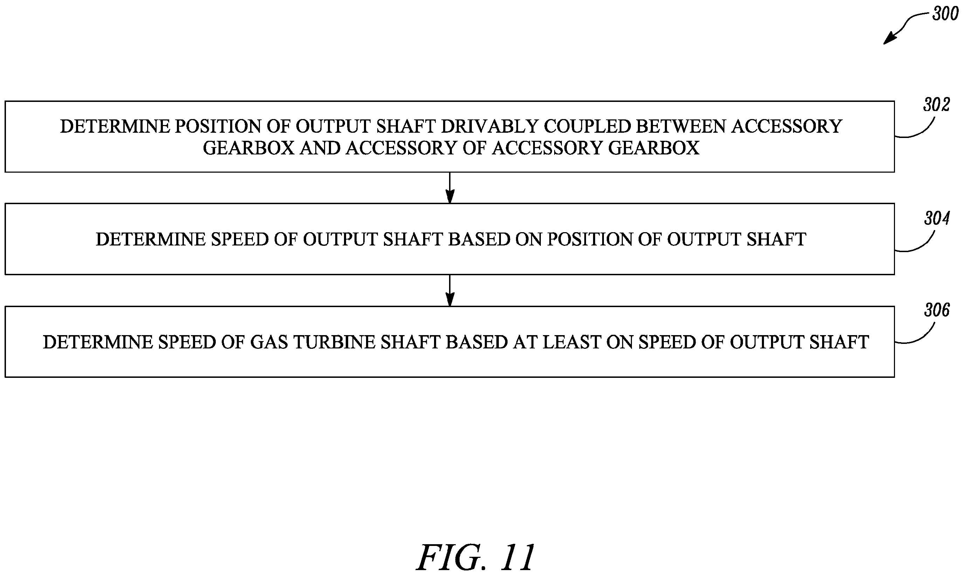

Figure 11 is a flowchart illustrating a method 300 for use with the gas turbine engine 10 of Figure 1, according to an embodiment of the present disclosure. The method 300 may be implemented by the system 100 of Figures 6A and 6B. The method 300 may also be implemented by the system 200 of Figures 8A and 8B.

Referring to Figures 6A, 6B, 8A, 8B, 10, and 11, at step 302, the method 300 includes determining the position of the output shaft 106 drivably coupled between the accessory gearbox 52 and the accessory 64 of the accessory gearbox 52. At step 304, the method 300 further includes determining the speed S1 of the output shaft 106 based on the position of the output shaft 106. At step 306, the method 300 further includes determining the speed S2 of the gas turbine shaft 50 based at least on the speed S1 of the output shaft 106. Specifically, the controller 114 is configured to determine the speed S2 of the gas turbine shaft 50 based on the speed S1 of the output shaft 106 and the gear ratio GR of the accessory gearbox 52.

The method 300 may further include providing the prime mover 102 and the drive shaft 104 drivably coupled to the prime mover 102. The method 300 may further include providing the clutch 108 configured to selectively drivably engage the drive shaft 104 with the output shaft 106. The method 300 may include comparing the speed S2 of the gas turbine shaft 50 with the predetermined threshold speed S3. The method 300 may further include drivably engaging the drive shaft 104 with the output shaft 106 upon determining that the speed S2 of the gas turbine shaft 50 is less than the predetermined threshold speed S3.

In some embodiments, drivably engaging the drive shaft 104 with the output shaft 106 further includes controlling the clutch 108 and/or the prime mover 102 to drivably engage the drive shaft 104 with the output shaft 106. In some embodiments, controlling the clutch 108 and/or the prime mover 102 further includes activating the prime mover 102, such that the clutch 108 drivably engages the drive shaft 104 with the output shaft 106 (in case of the overrunning clutch in Figure 6B). In some embodiments, controlling the clutch 108 and/or the prime mover 102 further includes activating the prime mover 102 and controlling the clutch 108 (i.e., the active clutch in Figure 8B) to drivably engage the drive shaft 104 with the output shaft 106.

In some embodiments, the method 300 further includes keeping the drive shaft 104 disengaged (e.g., via the clutch 108) from the output shaft 106 upon determining that the speed S2 of the gas turbine shaft 50 is greater than or equal to the predetermined threshold speed S3.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A system (70, 100, 200) for use with a gas turbine engine (10) having a gas turbine shaft (50) and an accessory gearbox (52) drivably coupled to the gas turbine shaft (50), the system (70, 100, 200) comprising:
an accessory (64) of the accessory gearbox (52);
an output shaft (106) drivably coupled between the accessory gearbox (52) and the accessory (64);
a sensor (110) configured to generate a sensor signal (112) indicative of a position of the output shaft (106); and
a controller (114) communicably coupled to the sensor (110), wherein the controller (114) is configured to:
determine a speed (S1) of the output shaft (106) based on the sensor signal (112); and
determine a speed (S2) of the gas turbine shaft (50) based at least on the speed (S1) of the output shaft (106).

2. The system (100, 200) of claim 1, further comprising:
a prime mover (102);
a drive shaft (104) drivably coupled to the prime mover (102); and
a clutch (108) configured to selectively drivably engage the drive shaft (104) with the output shaft (106).

3. The system (100, 200) of claim 2, wherein the controller (114) is further configured to:
compare the speed (S2) of the gas turbine shaft (50) with a predetermined threshold speed (S3); and
control the clutch (108) and/or the prime mover (102) to drivably engage the drive shaft (104) with the output shaft (106) upon determining that the speed (S2) of the gas turbine shaft (50) is less than the predetermined threshold speed (S3).

4. The system (100, 200) of claim 3, wherein the controller (114) is further configured to control the clutch (108) and/or the prime mover (102) to keep the drive shaft (104) disengaged from the output shaft (106) upon determining that the speed (S2) of the gas turbine shaft (50) is greater than or equal to the predetermined threshold speed (S3).

5. The system (100) of claim 3 or claim 4, wherein the controller (114) is further configured to keep the prime mover (102) in an inactive state upon determining that the speed (S2) of the gas turbine shaft (50) is greater than or equal to the predetermined threshold speed (S3).

6. The system (200) of any one of claims 3 to 5, wherein the clutch (108) is an active clutch communicably coupled to the controller (114) and configured to be controlled by the controller (114), and wherein the controller (114) is further configured to control the clutch (108) and activate the prime mover (102) to drivably engage the drive shaft (104) with the output shaft (106) upon determining that the speed (S2) of the gas turbine shaft (50) is less than the predetermined threshold speed (S3).

7. The system (200) of claim 6, wherein the controller (114) is further configured to control the clutch (108) to keep the drive shaft (104) disengaged from the output shaft (106) upon determining that the speed (S2) of the gas turbine shaft (50) is greater than or equal to the predetermined threshold speed (S3).

8. The system (100) of any one of claims 3 to 5, wherein the clutch (108) is an overrunning clutch configured to drivably engage the drive shaft (104) with the output shaft (106) only if a speed of the drive shaft (104) is greater than the speed (S1) of the output shaft (106), and wherein the controller (114) is further configured to activate the prime mover(102) to drivably engage the drive shaft (104) with the output shaft (106) upon determining that the speed (S2) of the gas turbine shaft (50) is less than the predetermined threshold speed (S3).

9. The system (100, 200) of any one of claims 3 to 8, further comprising an electronic module (120) communicably coupled to the prime mover (102) and the controller (114), wherein the electronic module (120) is configured to control the prime mover (102) in response to a control signal (122) received from the controller (114), such that the controller (114) controls the prime mover (102) via the electronic module (120).

10. The system (100, 200) of any one of claims 2 to 9, wherein the accessory (64) is a barring unit (62), and the prime mover (102) is a barring motor disposed within the barring unit (62).

11. The system (100, 200) of any one of claims 2 to 10, wherein the sensor (110) is disposed on the output shaft (106) between the clutch (108) and the accessory gearbox (52).

12. The system (70, 100, 200) of any one of claims 1 to 11, further comprising a converter (118) communicably coupled to the sensor (110) and the controller (114), wherein the converter (118) is configured to receive the sensor signal (112) from the sensor (110) and convert the sensor signal (112) into an output signal (119), and wherein the controller (114) is further configured to receive the output signal (119) and determine the speed (S1) of the output shaft (106) based on the output signal (119).

13. A gas turbine engine (10) comprising:
a gas turbine shaft (50);
an accessory gearbox (52) drivably coupled to the gas turbine shaft (50); and
the system (70, 100, 200) of any one of claims 1 to 16, wherein the output shaft (106) of the system (70, 100, 200) is drivably coupled between the accessory gearbox (52) and the accessory (64).

14. A method (300) for use with a gas turbine engine (10) having a gas turbine shaft (50) and an accessory gearbox (52) drivably coupled to the gas turbine shaft (50), the method (300) comprising:
determining a position of an output shaft (106) drivably coupled between the accessory gearbox (52) and an accessory (64) of the accessory gearbox (52);
determining a speed (S1) of the output shaft (106) based on the position of the output shaft (106); and
determining a speed (S2) of the gas turbine shaft (50) based at least on the speed (S1) of the output shaft (106).

15. An apparatus (115) for use with a gas turbine engine (10) having a gas turbine shaft (50) and an accessory gearbox (52) drivably coupled to the gas turbine shaft (50), the apparatus (115) comprising a controller (114) configured to:
determine a position of an output shaft (106) drivably coupled between the accessory gearbox (52) and an accessory (64) of the accessory gearbox (52);
determine a speed (S1) of the output shaft (106) based on the position of the output shaft (106); and
determine a speed (S2) of the gas turbine shaft (50) based at least on the speed (S1) of the output shaft (106).
